# EUROPÄISCHE PATENTSCHRIFT

(11) **EP 0 828 788 B1**
(45) Veröffentlichungstag und Bekanntmachung des Hinweises auf die Patenterteilung: **22.08.2001**
(21) Anmeldenummer: 96916133.0
(22) Anmeldetag: 20.05.1996
(51) Int. Cl.: C08L 3/02

(54) **STÄRKE UND POLYURETHANE ENTHALTENDE POLYMERBLENDS**
POLYMER BLENDS CONTAINING STARCH AND POLYURETHANE
MELANGES DE POLYMERES CONTENANT DU POLYURETHANE ET DE L'AMIDON

(30) Priorität: 01.06.1995 DE 19520093
(43) Veröffentlichungstag der Anmeldung: 18.03.1998
(73) Patentinhaber: BAYER AG, 51368 Leverkusen (DE)
(72) Erfinder: KALBE, Jochen, D-45219 Essen (DE); MÜLLER, Hanns-Peter, D-51519 Odenthal (DE); KOCH, Rainhard, D-51065 Köln (DE)
(86) Internationale Anmeldenummer: EP9602161
(87) Internationale Veröffentlichungsnummer: WO9638502

(56) Entgegenhaltungen:
- WO-A-92/10539
- DE-A- 2 035 732
- DE-A- 3 428 111
- GB-A- 1 524 821
- US-A- 3 639 309

## Beschreibung

Die Erfindung betrifft thermoplastisch verarbeitbare und biologisch abbaubare, Stärke enthaltende Polymerblends, ein Verfahren zu ihrer Herstellung und ihre Verwendung zur Herstellung von Formteilen, Folien, Fasern, Beschichtungen oder Laminaten durch thermoplastische Verarbeitung.

Das Eigenschaftsbild von thermoplastisch verarbeitbarer Stärke kann durch Vermischen der Stärke, z.B. während eines Extrusionsprozeß, mit synthetischen Polymeren verbessert und optimiert werden.

Hierzu eignen sich besonders hydrophile Polymere wie Polyvinylalkohol oder Celluloseether (DE 4 237 535) oder auch ionische Polysaccharidderivate oder ionische Polymerisate (US 5 095 054). Außerdem werden in der Patentliteratur die unterschiedlichsten Blends von Stärke mit organischen Abmischkomponenten, insbesondere Kunststoffen wie z.B. Polyurethanen, Polyamiden, Polyesteramiden, Polystyrol, Polyacrylnitril, Polyacrylaten u.dgl. beschrieben (vgl. z.B. WO 92/10539 DE-A 2 035 732, WO 94/03543, WO 92/19680, DE 4 038 732, sowie die unter den Nummern 536 679, 409 783, 409 788, 409 789, 407 781, 408 501, 408 502, 408 503, 407 350, 404 723, 404 728 oder 327 505 veröffentlichten europäischen Patentanmeldungen).

Die biologische Abbaubarkeit von Stärke enthaltenden Polymerblends setzt voraus, daß alle Bestandteile des Blends biologisch abbaubar sind. Es ist allerdings bekannt, daß die herkömmlichen Polymerisate mit durchgehender C-C-Verknüpfung mit Ausnahme von PVA nicht biologisch abbaubar sind (vgl. z.B Agricultural and Synthetic Polymers, Biodegradability and Utilization, ASC Symposium Series 433, 1990, Seite 6, Edited by J. S. Glass and G. Swift). Auch die kommerziell verfügbaren Polyamide und die meisten der bekannten Polysaccharidderivate sind nicht biologisch abbaubar.

Biologisch abbaubare Blendpartner für Stärke sind jedoch beispielsweise Poly-ε-caprolacton, Polyhydroxybuttersäurevaleransäure-Copolymere oder Polylactidglucolid-Copolymere (DE 4 237 535). Es handelt sich bei diesen Polymeren jedoch um hydrophobe Substanzen, die nur unter Mitverwendung von Phasenvermittlern oder von weiteren hydrophilen Polymeren mit der Stärke zum Polymerblend vereinigt werden können.

Es war daher die der Erfindung zugrundeliegende Aufgabe, neue, thermoplastisch verarbeitbare und biologisch abbaubare, Stärke enthaltende Polymerblends zur Verfügung zu stellen, die thermoplastisch zu Endprodukten mit hochwertigen mechanischen Eigenschaften verarbeitbar sind und die durch Vereinigung der Stärke mit wäßrigen Dispersionen von selbstemulgierbaren Kunststoffen hergestellt werden können.

Diese Aufgabe konnte mit den nachstehend näher beschriebenen Polymerblends bzw. mit dem Verfahren zu ihrer Herstellung gelöst werden.

Gegenstand der Erfindung sind thermoplastisch verformbare, biologisch abbaubare, Stärke enthaltende Polymerblends, bestehend im wesentlichen aus
A) 100 Gew.-Teilen wasserfreier Stärke,
B) 0,1 bis 70 Gew.-Teilen Harnstoffgruppen aufweisendem Polyurethan,
C) 0,5 bis 70 Gew.-Teilen einer Weichmacherkomponente, bestehend aus Harnstoff und/oder mindestens einem mehrwertigen Alkohol des Molekulargewichtsbereichs 62 bis 400 und
D) 2 bis 20 Gew.-Teilen Wasser,
dadurch gekennzeichnet, daß es sich bei der Komponente B) um Harnstoffgruppen aufweisende Polyurethane handelt, die nach bekannten Verfahren unter Einhaltung eines Äquivalentverhältnisses von Isocyanatgruppen zu gegenüber Isocyanatgruppen reaktionsfähigen Gruppen von 1:1 bis 2:1 aus
a) einer Diisocyanatkomponente, bestehend aus
   a1) Hexamethylendiisocyanat oder
   a2) Gemischen aus Hexamethylendiisocyanat mit insgesamt bis zu 60 Gew.-%, bezogen auf Gemisch, 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit
b) einer Diolkomponente, bestehend aus
   b1) mindestens einem Polyesterdiol eines aus dem Hydroxylgruppengehalt berechenbaren Molekulargewicht von 500 bis 10 000 aus (i) Adipinsäure und/oder Bernsteinsäure und (ii) mindestens einem Alkandiol mit 2 bis 6 Kohlenstoffatomen oder
   b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,
c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus
   c1) Diaminosulfonaten der allgemeinen Formel

      H₂N-(-CH₂-)ₙ-NH-(-CH₂-)ₘ-SO₃Me

      oder
   c2) Gemischen aus Diaminosulfonaten c1) mit bis zu 90 Gew.-%, bezogen auf das Gesamtgewicht der Komponente c), an Ethylendiamin, gegebenenfalls
d) hydrophilen Polyetheralkoholen der allgemeinen Formel

   H-X-O-R

   in einer Menge von bis zu 10 Gew.-%, bezogen auf das Gesamtgewicht der Komponenten b), c) und d) sowie gegebenenfalls
e) Wasser, welches nicht in die Berechnung des Äquivalentverhältnisses von Isocyanatgruppen zu gegenüber Isocyanatgruppen reaktionsfähigen Gruppen eingeht,
hergestellt worden sind, wobei in den genannten allgemeinen Formeln
- m und n: unabhängig voneinander für Zahlen von 2 bis 6 stehen,
- Me: für Kalium oder Natrium steht,
- R: für einen einwertigen Kohlenwasserstoffrest mit 1 bis 12 Kohlenstoffatomen steht, und
- X: eine Polyalkylenoxid-Kette des Molekulargewichtsbereichs 88 bis 4000 bedeutet, deren Alkylenoxideinheiten zumindest zu 40 % aus Ethylenoxideinheiten und zum Rest aus Propylenoxideinheiten bestehen.

Gegenstand der Erfindung ist auch ein Verfahren zur Herstellung derartiger Polymerblends durch Vermischen der Einzelkomponenten bei 80 bis 150°C in Kunststoffverarbeitungsmaschinen, wobei die Stärke A) gegebenenfalls in Form von wasserhaltiger Stärke und/oder die Weichmacher C) gegebenenfalls in Form von wäßrigen Lösungen zum Einsatz gelangen, unter gleichzeitiger oder anschließender Entfernung des eingebrachten Wassers durch Verdampfen bis auf einen Restgehalt von 2 bis 20 Gew.-Teilen pro 100 Gew.-Teilen wasserfreier Stärke, dadurch gekennzeichnet, daß man die Harnstoffgruppen aufweisenden Polyurethane B) in Form von 20 bis 50 gew.-%igen wäßrigen Dispersionen einsetzt, die nach bekannten Verfahren unter Einhaltung eines Äquivalentverhältnisses von Isocyanatgruppen zu gegenüber Isocyanatgruppen reaktionsfähigen Gruppen von 1:1 bis 2:1 aus
a) einer Diisocyanatkomponente, bestehend aus
   a1) Hexamethylendiisocyanat oder
   a2) Gemischen aus Hexamethylendiisocyanat mit insgesamt bis zu 60 Gew.-%, bezogen auf Gemisch, 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit
b) einer Diolkomponente, bestehend aus
   b1) mindestens einem Polyesterdiol eines aus dem Hydroxylgruppengehalt berechenbaren Molekulargewicht von 500 bis 10 000 aus (i) Adipinsäure und/oder Bernsteinsäure und (ii) mindestens einem Alkandiol mit 2 bis 6 Kohlenstoffatomen oder
   b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,
c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus
   c1) Diaminosulfonaten der allgemeinen Formel

      H₂N-(-CH₂-)ₙ-NH-(-CH₂-)ₘ-SO₃Me

      oder
   c2) Gemischen aus Diaminosulfonaten c1) mit bis zu 90 Gew.-%, bezogen auf das Gesamtgewicht der Komponente c), an Ethylendiamin, gegebenenfalls
d) hydrophilen Polyetheralkoholen der allgemeinen Formel

   H-X-O-R

   in einer Menge von bis zu 10 Gew.-%, bezogen auf das Gesamtgewicht der Komponenten b), c) und d) sowie gegebenenfalls
e) Wasser, welches nicht in die Berechnung des Äquivalentverhältnisses von Isocyanatgruppen zu gegenüber Isocyanatgruppen reaktionsfähigen Gruppen eingeht,
hergestellt worden sind, wobei in den genannten allgemeinen Formeln
- m und n: unabhängig voneinander für Zahlen von 2 bis 6 stehen,
- Me: für Kalium oder Natrium steht,
- R: für einen einwertigen Kohlenwasserstoffrest mit 1 bis 12 Kohlenstoffatomen steht, und
- X: eine Polyalkylenoxid-Kette des Molekulargewichtsbereichs 88 bis 4000 bedeutet, deren Alkylenoxideinheiten zumindest zu 40 % aus Ethylenoxideinheiten und zum Rest aus Propylenoxideinheiten bestehen.

Gegenstand der Erfindung ist auch die Verwendung dieser Polymerblends zur Herstellung von Formteilen, Folien, Fasern, Beschichtungen oder Laminaten durch thermoplastische Verarbeitung.

Die erfindungsgemäßen Polymerblends sind vollständig biologisch abbaubar. Diese bedeutet im Rahmen der Erfindung, daß Testfilme der Dicke 0,05 bis 0,5 mm, die beispielsweise durch thermoplastische Formgebung hergestellt worden sind, den nachstehend beschriebenen Folienkompostiertest mindestens ebenso gut wie eine entsprechende Cellulose-Folie bestehen. Diese vollständige biologische Abbaubarkeit hat selbstverständlich auch eine einwandfreie Kompostierbarkeit der Polymerblends bzw. der aus ihnen hergestellten Endprodukte zur Folge.

Der nachstehend benutzte Begriff "wäßrige Dispersion" soll auch wäßrige Lösungen umfassen, die dann vorliegen können, wenn die Konzentration an hydrophilen Zentren in den Harnstoffgruppen aufweisenden Polyurethanen ausreichend hoch ist, um eine Wasserlöslichkeit zu gewährleisten. Oftmals handelt es sich bei den erfindungsgemäß verwendenden Dispersionen um wäßrige Systeme, die sowohl dispergierte als auch gelöste Harnstoffgruppen aufweisende Polyurethane enthalten.

Bei der Komponente A) der erfindungsgemäßen Blends handelt es sich um Stärke beliebigen Ursprungs wie beispielsweise Stärke aus Kartoffeln, Mais, Reis oder sonstigen Getreidesorten. Diesbezüglich besteht keinerlei Unterschied zu der Stärke, die gemäß der Lehre der oben zitierten Veröffentlichungen eingesetzt wird. Der Wassergehalt der beim erfindungsgemäßen Verfahren vorzugsweise in Pulverform eingesetzten Stärke liegt im allgemeinen bei 5 bis 40, vorzugsweise 5 bis 15 Gew.-%. Der Umstand, daß die Komponente A) als "wasserfreie" Stärke bezeichnet wird, dient lediglich der Klarstellung der Zusammensetzung der erfindungsgemäßen Blends, deren Gesamtwassergehalt aus den Angaben unter Punkt D hervorgeht.

Bei der erfindungswesentlichen Komponente B) handelt es sich um Harnstoffgruppen aufweisende Polyurethane, die aus den bereits obengenannten Ausgangsmaterialien a), b), c) und gegebenenfalls d) und/oder gegebenenfalls e) in den genannten Mengenverhältnissen hergestellt worden sind. Die Harnstoffgruppen aufweisenden Polyurethane werden beim erfindungsgemäßen Verfahren in Form von 20 bis 50, vorzugsweise 40 bis 50 gew.-%igen wäßrigen Dispersionen eingesetzt.

Die Diisocyanatkomponente a) besteht vorzugsweise ausschließlich aus Hexamethylendiisocyanat.

Die Diolkomponente b) besteht entweder aus b1) mindestens einem Polyesterdiol oder b2) aus einem Gemisch aus mindestens einem Polyesterdiol b1) mit bis zu 32, vorzugsweise bis zu 10 Gew.-% mindestens eines, gegebenenfalls Ethergruppen aufweisenden Alkandiols mit 2 bis 6 Kohlenstoffatomen.

Geeignete Polyesterdiole b1) sind solche eines aus dem Hydroxylgruppengehalt errechenbaren Molekulargewichts 500 bis 10 000, vorzugsweise 1 000 bis 2 500 auf Basis von (i) Adipinsäure und/oder Bemsteinsäure und (ii) gegebenenfalls Ethergruppen aufweisenden Alkandiolen mit 2 bis 6 Kohlenstoffatomen wie z.B. Ethylenglykol, Diethylenglykol, 1,4-Butandiol, Neopentylglykol und/oder 1,6-Hexandiol. Polyesterdiole, bei deren Herstellung ausschließlich Ethylenglykol und/oder 1,4-Butandiol als Diol eingesetzt worden sind, sind besonders bevorzugt.

Bei den gegebenenfalls als Hydroxylgruppen aufweisenden Kettenverlängerungsmitteln mitzuverwendenden, gegebenenfalls Ethergruppen aufweisenden Alkandiolen mit 2 bis 6 Kohlenstoffatomen handelt es sich um solche der soeben beispielhaft genannten Art.

Die Diaminkomponente c) besteht entweder aus c1) aus Diaminosulfonaten der bereits obengenannten allgemeinen Formel oder aus c2) Gemischen derartiger Diaminosulfonate mit Ethylendiamin, welches, falls überhaupt, in Mengen von bis zu 90, vorzugsweise bis zu 70 Äquivalent-%, bezogen auf die gegenüber Isocyanatgruppen reaktionsfähigen Aminogruppen der Komponente c) zum Einsatz gelangt. Ganz besonders bevorzugte Diaminosulfonate sind die Kalium- oder Natriumsalze der N-(2-Aminoethyl)-2-aminoethansulfonsäure.

Die Diaminkomponente c) wird im allgemeinen in einer Menge von 1 bis 10, vorzugsweise 2 bis 5 Gew.-%, bezogen auf das Gewicht der Komponente b) mitverwendet.

Bei der gegebenenfalls mitzuverwendenden Aufbaukomponente d) handelt es sich um hydrophile, einwertige Polyetheralkohole der allgemeinen Formel

H-X-O-R

in welcher
- R und X: die bereits obengenannte Bedeutung haben.

Bevorzugt sind solche derartige Polyetheralkohole, für welche
- R: für einen aliphatischen Kohlenwasserstoffrest mit 1 bis 4 Kohlenstoffatomen steht und
- X: für eine Polyalkylenoxidkette des Molekulargewichtsbereichs 500 bis 4 000 steht, in welcher mindestens 40, insbesondere mindestens 70 und besonders bevorzugt 100 % der vorliegenden Alkylenoxideinheiten, Ethylenoxideinheiten und die restlichen Alkylenoxideinheiten Propylenoxideinheiten darstellen.

Die Herstellung derartiger einwertiger Polyetheralkohole geschieht durch an sich bekannte Alkoxylierung geeigneter Startermoleküle R-OH wie beispielsweise Methanol, n-Butanol, n-Hexanol oder n-Dodecanol unter bevorzugter Verwendung von Ethylenoxid und gegebenenfalls Propylenoxid, in, den oben gemachten Ausführungen entsprechenden Mengenverhältnissen der Alkylenoxide. Hierbei können die genannten Alkylenoxide als Gemisch und/oder nacheinander zum Einsatz gelangen.

Die einwertigen Polyetheralkohole d) werden, falls überhaupt, in Mengen von bis zu 10, vorzugsweise bis zu 3 Gew.-%, bezogen auf das Gesamtgewicht der Komponenten b), c) und d) eingesetzt.

Als weitere, gegebenenfalls in Betracht kommende Aufbaukomponente bei der Herstellung der Harnstoffgruppen aufweisenden Polyurethane ist e) Wasser zu nennen, welches insbesondere dann als Reaktant in Betracht zu ziehen ist, wenn bei der Herstellung der Polyurethane die in letzter Stufe durchzuführende Kettenverlängerungsreaktion von vorab hergestellten NCO-Prepolymeren in wäßrigem Medium erfolgt, insbesondere dann, wenn die in dem Wasser gelösten Diamine c) in, bezogen auf die NCO-Gruppen der NCO-Prepolymeren in unteräquivalenten Mengen zum Einsatz gelangen.

Neben diesen Aufbaukomponenten kommen im Prinzip auch trifunktionelle Verbindungen in untergeordneten Mengen in Betracht wie beispielsweise Glycerin oder Trimethylolpropan, die entweder in geringen Mengen in die Polyester b1) eingebaut oder in freier Form als Teil der Komponente b2) zum Einsatz gelangen können. Die Mitverwendung von derartigen verzweigenden Molekülen muß in der Regel durch monofunktionelle Verbindungen ausgeglichen werden, so daß, rein rechnerisch, wieder lineare Polymere resultieren.

Die Herstellung der Harnstoffgruppen aufweisenden Polyurethane aus den beispielhaft genannten Aufbaukomponenten kann nach beliebigen Verfahren des Standes der Technik erfolgen. Vorzugsweise wird jedoch nach dem bekannten Prepolymerverfahren gearbeitet, und zwar dergestalt, daß man aus den Komponenten b) und gegebenenfalls d) sowie der Diisocyanatkomponente a) unter Einhaltung eines NCO/OH-Äquivalentverhältnisses von 1,5:1 bis 4:1, vorzugsweise 1,8:1 bis 2,5:1 ein NCO-Prepolymer bzw. -Semiprepolymer herstellt und dieses anschließend mit der Komponente c) unter Kettenverlängerung zur Reaktion bringt.

Dabei wird das Prepolymer bzw. Semiprepolymer im allgemeinen lösungsmittelfrei bei Temperaturen von 20 bis 150°C hergestellt und anschließend in einem geeigneten Lösungsmittel gelöst. Selbstverständlich kann die Bildung der Prepolymeren bzw. Semiprepolymeren auch direkt in einem Lösungsmittel erfolgen. Als Lösungsmittel kommen insbesondere gegenüber Isocyanatgruppen inerte, mit Wasser unbegrenzt mischbare Lösungsmittel in Betracht. Bevorzugt wird Aceton als Lösungsmittel verwendet.

Die so hergestellten Prepolymeren bzw. Semiprepolymeren werden in der zweiten Reaktionsstufe mit der Komponente c) unter Kettenverlängerung zur Reaktion gebracht. Hierbei liegt das Äquivalentverhältnis von Isocyanatgruppen der Prepolymeren bzw. Semiprepolymeren einerseits zu gegenüber Isocyanatgruppen reaktionsfähigen Aminogruppen der Komponente c) andererseits bei 1:1 bis 20:1, vorzugsweise 1,2:1 bis 4:1. Die Kettenverlängerungsreaktion kann in Lösung, vorzugsweise in acetonischer Lösung oder auch in wäßrigem Milieu dergestalt erfolgen, daß man die Lösung der Prepolymeren bzw. Semiprepolymeren in organischem Lösungsmittel mit einer Lösung der Komponente c) in Wasser unter intensivem Durchmischen vereinigt. Wie bereits angedeutet, erfolgt gegebenenfalls hierbei auch eine Kettenverlängerungsreaktion durch Reaktion der NCO-Gruppen der Prepolymeren bzw. Semiprepolymeren mit dem Wasser. Bei der genannten, bevorzugten 2-stufigen Herstellung der Harnstoffgruppen aufweisenden Polyurethane werden die Äquivalentverhältnisse zwischen Isocyanatgruppen und gegenüber Isocyanatgruppen reaktionsfähigen Gruppen der beiden Reaktionsstufen im Rahmen der gemachten Offenbarung so gewählt, daß das Gesamtverhältnis von Isocyanatgruppen zu gegenüber Isocyanatgruppen reaktionsfähigen Gruppen der Komponenten b) bis d) dem oben angegebenen Verhältnis von 1:1 bis 2:1 entspricht. Das Wasser geht auf keinen Fall in die Berechnung der genannten Äquivalentverhältnisse ein.

Die Kettenverlängerungsreaktion erfolgt im allgemeinen innerhalb des Temperaturbereichs von 20 bis 50°C.

Grundsätzlich möglich, aber keineswegs bevorzugt, kann die Kettenverlängerungsreaktion auch in der Schmelze, d.h. in Abwesenheit von Lösungsmitteln und von Wasser erfolgen (Schmelzdispergierverfahren).

Zur Herstellung der erfindungsgemäß zu verwendenden Dispersionen werden die kettenverlängerten Polyurethane bzw. ihre Lösungen in organischen Lösungsmitteln, falls die Kettenverlängerungsreaktion in Abwesenheit von Wasser durchgeführt worden war, mit dem Dispergierwasser vermischt, worauf sich gegebenenfalls die destillative Entfernung zumindest eines Teils des gegebenenfalls mitverwendeten Hilfslösungsmittels anschließt. Falls die Kettenverlängerungsreaktion in wäßrigem Milieu erfolgte, kann zur Herstellung der wäßrigen Dispersionen gegebenenfalls weiteres Wasser zugegeben werden. Auch in diesem Fall kann selbstverständlich das verwendete Hilfslösungsmittel gewünschtenfalls destillativ entfernt werden.

Die Gesamtmenge des zum Einsatz gelangenden Wassers wird dabei so bemessen, daß wäßrige Dispersionen mit dem oben angegebenen Feststoffgehalt resultieren.

Die Komponente B) wird bei der Durchführung des erfindungsgemäßen Verfahrens in Mengen von 0,1 bis 70, vorzugsweise 0,5 bis 50 und besonders bevorzugt 5 bis 40 Gew.-%, bezogen auf das Gewicht der Stärke, eingesetzt, wobei sich diese Prozentangaben auf wasserfreie Stärke und wasserfreies Polyurethan beziehen.

Bei der Komponente C) handelt es sich um an sich bekannte Weichmacher für die Stärke wie beispielsweise Harnstoff oder mehrwertige Alkohole des Molekulargewichtsbereichs 62 bis 400, vorzugsweise 62 bis 200 wie beispielsweise Ethylenglykol, Propylenglykol, Glycerin, Sorbitol, Mannitol, Polyethylenglykole des genannten Molekulargewichtsbereichs oder beliebige Gemische derartiger Weichmacher.

Diese Weichmacher können beim erfindungsgemäßen Verfahren gegebenenfalls in Form von wäßrigen Lösungen zum Einsatz gelangen.

Die Menge des beim erfindungsgemäßen Verfahren eingesetzten Weichmachers C) beträgt 0,5 bis 70, vorzugsweise 5 bis 60 und besonders bevorzugt 10 bis 50 Gew.-%, bezogen auf das Gewicht der Stärke, wobei sich auch hier die Prozentangaben auf wasserfreie Substanzen beziehen.

Das in den erfindungsgemäßen Polymerblends vorliegende Wasser D) stellt im allgemeinen den Restgehalt des nicht durch Verdampfen entfernten, mit den Ausgangskomponenten A) bis C) und/oder separat eingebrachten Wassers dar. Der Wassergehalt der erfindungsgemäßen Polymerblends liegt bei 2 bis 20, vorzugsweise 5 bis 10 Gew.-%, bezogen auf das Gewicht der wasserfreien Stärke A).

Die Durchführung des erfindungsgemäßen Verfahrens erfolgt in herkömmlichen Kunststoffverarbeitungsmaschinen wie z.B. Spritzgußmaschinen bzw. Extrudern.

Hierbei kommen im allgemeinen Temperaturen von 80 bis 180, vorzugsweise 100 bis 160°C zum Einsatz.

Zur Durchführung des erfindungsgemäßen Verfahrens kann beispielsweise so vorgegangen werden, daß man zunächst die Komponenten A) und C), gegebenenfalls unter Mitverwendung von zugesetztem Wasser innig durchmischt und anschließend die Komponente B) in Form einer wäßrigen Dispersion hinzudosiert. Überschüssiges Wasser kann im Verlauf des Durchmischens und insbesondere am Ende des Extruders durch eine Ausdampfvorrichtung entfernt werden.

Die so hergestellten, vollständig biologisch abbaubaren und thermoplastisch verarbeitbaren Granulate können in bekannten Kunststoffverarbeitungsmaschinen wie z.B. Spritzgußmaschinen der erfindungsgemäßen Verwendung zugeführt werden.

Die erfindungsgemäßen Polymerblends können insbesondere zur Herstellung von Spritzgußteilen, zur Extrusion zum Blasformen z.B. von Flaschen, Pflanztöpfen und anderen Hohlkörpern, zur Herstellung von Folien z.B. für Biomüllsäcke oder für Garten- und Landwirtschaftsbau oder auch zur Herstellung von Fasern verwendet werden.

Die Vorteile der erfindungsgemäßen Polymerblends gegenüber vollsynthetisch biologisch abbaubaren Polymeren liegen u.a. in dem durch die Verwendung von Stärke ermöglichten günstigeren Herstellungspreis und der Verwendung eines nachwachsenden Rohstoffs. Gegenüber den bereits bekannten Blends aus Stärke und synthetischen Polymeren erweisen sich die Stärke-Polyurethanpolyharnstoff-Blends überlegen durch die 100 %ige biologische Abbaubarkeit des Polyurethanpolyharnstoffs, durch die hervorragende Filmbildungsfähigkeit des Polyurethanpolyharnstoffs und der damit in Zusammenhang stehenden sehr guten mechanischen Eigenschaften der Blends wie z.B. der guten Reißfestigkeit oder der Schlagzähigkeit. Selbst bei hohen Stärkeanteilen von über 90 Gew.-% weisen die erfindungsgemäßen Polymerblends noch für viele Einsatzgebiete ausreichende mechanische Eigenschaften auf. Die gute Verträglichkeit der Einzelkomponenten verhindert außerdem das von vielen anderen Stärke-Blends bekannte Verspröden.

Die biologische Abbaubarkeit der erfindungsgemäßen Polymerblends kann beispielsweise unter Anwendung des Folienkompostiertests bestimmt werden. Hierzu kommen im allgemeinen durch Spritzgießen hergestellte Folien einer Dicke von 0,01 bis 0,1 mm zum Einsatz.

Die zu testenden Folien werden zur Durchführung des Folienkompostiertests zunächst bei 80°C bis zur Gewichtskonstanz getrocknet und dann in 6x6 Diarahmen eingespannt. Kompost aus einer Kompostieranlage wird 2 cm hoch in Plastikschalen gefüllt und die Folien darin eingelegt. Die gefüllten Kästen werden in einem Brutschrank für jeweils 4 Wochen nacheinander bei 60, 50 und 37°C inkubiert. Wasserverluste werden über den Gewichtsverlust bestimmt und ausgeglichen. Während der Inkubation wird einmal pro Woche der pH-Wert des Komposts gemessen. Nach jeweils 4 Wochen wird ein Ansatz abgebrochen, die Folien entnommen, gereinigt, bei 80°C bis zur Gewichtskonstanz getrocknet und fotografiert. Unmittelbar nach dem Trocknen wird der Gewichtsverlust der Folie durch erneutes Wiegen bestimmt.

In der vergifteten Kontrolle wird der Kompost bei 105°C getrocknet, das dabei verdampfte Wasser wurde dann durch ein 1 %ige HgCl₂-Lösung ersetzt. Die Folien für die vergiftete Kontrolle werden vorm Einbringen in das Kompostgemisch in die HgCl₂-Lösung eingelegt, getrocknet und dann in den vergifteten Kompost eingebracht. Der Kontrollansatz wird genauso inkubiert wie die anderen Ansätze.

Ein Kunststoff wird als abbaubar bezeichnet, wenn eine daraus hergestellte Folie in den mikrobiell aktiven Ansätzen ebenso wie die in einem Parallelversuch eingesetzte Cellulose-Folie völlig verschwindet und in der vergifteten Kontrolle erhalten bleibt.

In den nachfolgenden Beispielen beziehen sich alle Prozentangaben auf das Gewicht.

### Beispiel 1

### Herstellung einer erfindungsgemäß zu verwendenden Dispersion eines Polyurethans B)

170 g eines Polyesterdiols des Molekulargewichts 1700 aus Adipinsäure und einem Gemisch aus 1,6-Hexandiol und Neopentylglykol im Gewichtsverhältnis 1,9:1 werden 60 Minuten bei 120°C im Vakuum entgast. Unter Stickstoff werden dem Ansatz 0,2 ml Benzoylchlorid und in einem Guß 30,1 g Hexamethylendiisocyanat zugeführt. Nach 30 Minuten Rühren bei 120°C beträgt der NCO-Gehalt 3,2 %. Man löst das Prepolymer bei 50°C in 500 g Aceton, kühlt auf Raumtemperatur und gibt unter schnellem Rühren eine Mischung aus 9,7 g einer 50 %igen, wäßrigen Lösung von AAS-Salz und 1,51 g Ethylendiamin und 20 g Wasser zur acetonischen Lösung. Nach 15 Minuten Rühren wird mit 300 g Wasser versetzt und das Aceton bis 60°C und 140 mbar entfernt. Als Destillationsrückstand verbleiben 505 g. Nach dem Verdünnen mit 11 g Wasser erhält man eine 40 %ige, dünnflüssige, weiße Polyurethanharnstoffdispersion.

Eine Probe der Dispersion wird mit Wasser verdünnt, auf eine Glasplatte gegossen und getrocknet. Man erhält eine klare, klebfreie Folie mit einer Reißdehnung von mehr als 200 %. Die Schichtdicke beträgt 0,25 mm.

### Beispiel 2 (erfindungsgemäßes Verfahren)

Zur Durchführung des erfindungsgemäßen Verfahrens wird ein Extruder mit beheizbaren Zonen eingesetzt, die bei folgenden Temperaturen gehalten werden:

Zone 1: RT, Zone 2: 100°C, Zone 3: 140°C, Zone 4: 160°C, Zone 5: 160°C, Zone 7: 150°C, Zone 8: 160°C.

Die Drehzahl der Extruderwelle beträgt 40 U/min. Die eingesetzte Stärke (Kartoffelstärke mit einem Wassergehalt von 10 %) wird mit Glycerin (57 %, bezogen auf wasserfreie Stärke) und Wasser (32 %, bezogen auf wasserfreie Stärke) in der Einzugszone des Extruders vermischt. Die 40 %ige Polyurethandispersion gemäß Beispiel 1 wird in der Zone 4 in einer Menge von 11 % Polyurethan-Feststoff, bezogen auf wasserfreie Stärke, hinzudosiert.

An der Zone 7 befindet sich eine Destillationsvorrichtung, durch die überschüssiges Wasser bis auf einen Restgehalt von 10 %, bezogen auf wasserfreie Stärke, abdestilliert wird. Der extrudierte Strang des erfindungsgemäßen Polymerblends wird sofort nach Austritt aus dem Extruder granuliert. Der Erweichungspunkt des Granulats liegt bei 120°C.

### Beispiel 3 (erfindungsgemäße Verwendung)

Unter Verwendung einer Spritzgußmaschine D50 der Firma Demag, Nürnberg, wird das gemäß Beispiel 2 hergestellte Granulat ohne weitere Nachbehandlung verspritzt. Die Temperaturen der Heizzonen betragen hierbei 125°C, 130°C, 140°C und 150°C an der Spritzdüse. Als Form dient eine bei Raumtemperatur gehaltene Pflanztopfform.

## Patentansprüche

1. Thermoplastisch verformbare, biologisch abbaubare, Stärke enthaltende Polymerblends, bestehend im wesentlichen aus
A) 100 Gew.-Teilen wasserfreier Stärke,
B) 0,1 bis 70 Gew.-Teilen Harnstoffgruppen aufweisendem Polyurethan,
C) 0,5 bis 70 Gew.-Teilen einer Weichmacherkomponente, bestehend aus Harnstoff und/oder mindestens einem mehrwertigen Alkohol des Molekulargewichtsbereichs 62 bis 400 und
D) 2 bis 20 Gew.-Teilen Wasser,
dadurch gekennzeichnet, daß es sich bei der Komponente B) um Harnstoffgruppen aufweisende Polyurethane handelt, die nach bekannten Verfahren unter Einhaltung eines Äquivalentverhältnisses von Isocyanatgruppen zu gegenüber Isocyanatgruppen reaktionsfähigen Gruppen von 1:1 bis 2:1 aus
a) einer Diisocyanatkomponente, bestehend aus
a1) Hexamethylendiisocyanat oder
a2) Gemischen aus Hexamethylendiisocyanat mit insgesamt bis zu 60 Gew.-%, bezogen auf Gemisch, 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit
b) einer Diolkomponente, bestehend aus
b1) mindestens einem Polyesterdiol eines aus dem Hydroxylgruppengehalt berechenbaren Molekulargewicht von 500 bis 10 000 aus (i) Adipinsäure und/oder Bernsteinsäure und (ii) mindestens einem Alkandiol mit 2 bis 6 Kohlenstoffatomen oder
b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,
c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus
c1) Diaminosulfonaten der allgemeinen Formel
H₂N-(-CH₂-)ₙ-NH-(-CH₂-)ₘ-SO₃Me
oder
c2) Gemischen aus Diaminosulfonaten c1) mit bis zu 90 Gew.-%, bezogen auf das Gesamtgewicht der Komponente c), an Ethylendiamin, gegebenenfalls
d) hydrophilen Polyetheralkoholen der allgemeinen Formel
H-X-O-R
in einer Menge von bis zu 10 Gew.-%, bezogen auf das Gesamtgewicht der Komponenten b), c) und d) sowie gegebenenfalls
e) Wasser, welches nicht in die Berechnung des Äquivalentverhältnisses von Isocyanatgruppen zu gegenüber Isocyanatgruppen reaktionsfähigen Gruppen eingeht,
hergestellt worden sind, wobei in den genannten allgemeinen Formeln
m und n unabhängig voneinander für Zahlen von 2 bis 6 stehen,
Me für Kalium oder Natrium steht,
R für einen einwertigen Kohlenwasserstoffrest mit 1 bis 12 Kohlenstoffatomen steht, und
X eine Polyalkylenoxid-Kette des Molekulargewichtsbereichs 88 bis 4000 bedeutet, deren Alkylenoxideinheiten zumindest zu 40 % aus Ethylenoxideinheiten und zum Rest aus Propylenoxideinheiten bestehen.

2. Verfahren zur Herstellung von Polymerblends gemäß Anspruch 1 durch Vermischen der Einzelkomponenten bei 80 bis 150°C in Kunststoffverarbeitungsmaschinen, wobei die Stärke A) gegebenenfalls in Form von wasserhaltiger Stärke und/oder die Weichmacher C) in Form von wäßrigen Lösungen zum Einsatz gelangen, unter gleichzeitiger oder anschließender Entfernung des eingebrachten Wassers durch Verdampfen bis auf einen Restgehalt von 2 bis 20 Gew.-Teilen pro 100 Gew.-Teilen wasserfreier Stärke, dadurch gekennzeichnet, daß man die Harnstoffgruppen aufweisenden Polyurethane B) in Form von 20 bis 50 gew.-%igen wäßrigen Dispersionen einsetzt, die nach bekannten Verfahren unter Einhaltung eines Äquivalentverhältnisses von Isocyanatgruppen zu gegenüber Isocyanatgruppen reaktionsfähigen Gruppen von 1:1 bis 2:1 aus
a) einer Diisocyanatkomponente, bestehend aus
a1) Hexamethylendiisocyanat oder
a2) Gemischen aus Hexamethylendiisocyanat mit insgesamt bis zu 60 Gew.-%, bezogen auf Gemisch, 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit
b) einer Diolkomponente, bestehend aus
b1) mindestens einem Polyesterdiol eines aus dem Hydroxylgruppengehalt berechenbaren Molekulargewicht von 500 bis 10 000 aus (i) Adipinsäure und/oder Bernsteinsäure und (ii) mindestens einem Alkandiol mit 2 bis 6 Kohlenstoffatomen oder
b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,
c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus
c1) Diaminosulfonaten der allgemeinen Formel
H₂N-(-CH₂-)ₙ-NH-(-CH₂-)ₘ-SO₃Me
oder
c2) Gemischen aus Diaminosulfonaten c1) mit bis zu 90 Gew.-%, bezogen auf das Gesamtgewicht der Komponente c), an Ethylendiamin, gegebenenfalls
d) hydrophilen Polyetheralkoholen der allgemeinen Formel
H-X-O-R
in einer Menge von bis zu 10 Gew.-%, bezogen auf das Gesamtgewicht der Komponenten b), c) und d) sowie gegebenenfalls
e) Wasser, welches nicht in die Berechnung des Äquivalentverhältnisses von Isocyanatgruppen zu gegenüber Isocyanatgruppen reaktionsfähigen Gruppen eingeht,
hergestellt worden sind, wobei in den genannten allgemeinen Formeln
m und n unabhängig voneinander für Zahlen von 2 bis 6 stehen,
Me für Kalium oder Natrium steht,
R für einen einwertigen Kohlenwasserstoffrest mit 1 bis 12 Kohlenstoffatomen steht, und
X eine Polyalkylenoxid-Kette des Molekulargewichtsbereichs 88 bis 4000 bedeutet, deren Alkylenoxideinheiten zumindest zu 40 % aus Ethylenoxideinheiten und zum Rest aus Propylenoxideinheiten bestehen.

3. Verwendung der Polymerblends gemäß Anspruch 1 zur Herstellung von Formteilen, Folien, Fasern, Beschichtungen oder Laminaten durch thermoplastische Verarbeitung.

## Claims

1. Thermoformable, biodegradable polymer blends containing starch, comprising substantially
A) 100 parts by wt. of water-free starch
B) 0.1 to 70 parts by wt. of polyurethane having urea groups,
C) 0.5 to 70 parts by wt. of a plasticiser component comprising urea and/or at least one polyhydric alcohol in the molecular weight range from 62 to 400 and
D) 2 to 20 parts by wt. of water,
characterised in that component B) is polyurethanes having urea groups which have been prepared by known methods, whilst maintaining an equivalent ratio of isocyanate groups to groups which are reactive towards isocyanate groups of 1:1 to 2:1, from
a) a diisocyanate component comprising
a1) hexamethylene diisocyanate or
a2) mixtures of hexamethylene diisocyanate with a total of up to 60 wt.%, based on mixture, of 1-isocyanato-3,3,5-trimethyl-5-isocyanatomethylcyclohexane and/or 4,4'-diisocyanatodicyclo hexylmethane and/or 1-methyl-2,4(6)-diisocyanatocyclohexane with
b) a diol component, comprising
b1) at least one polyester diol having a molecular weight which may be calculated from the hydroxyl group content from 500 to 10,000, of (i) adipic acid and/or succinic acid and (ii) at least one alkane diol having 2 to 6 carbon atoms, or
b2) a mixture of such polyester diols with up to 32 wt.%, based on the total weight of component b), of optionally ether group-containing alkane diols having 2 to 6 carbon atoms,
c) a diamine component in an amount from 2 to 50 equivalent %, based on the total amount of groups which are reactive towards isocyanate groups and present in components b) and c), comprising
c1) diaminosulfonates corresponding to the general formula
H₂N-(-CH₂-)ₙ-NH-(-CH₂-)ₘ-SO₃Me
or
c2) mixtures of diaminosulfonates c1) with up to 90 wt.%, based on the total weight of component c), of ethylene diamine, optionally
d) hydrophilic polyether alcohols corresponding to the general formula
H-X-O-R
in an amount of up to 10 wt.%, based on the total weight of components b), c) and d), and optionally
e) water, which is not included in the calculation of the equivalent ratio of isocyanate groups to groups which are reactive towards isocyanates,
wherein, in the general formulae mentioned,
m and n independently of one another, stand for numbers from 2 to 6,
Me stands for potassium or sodium,
R stands for a monovalent hydrocarbon radical having 1 to 12 carbon atoms, and
X means a polyalkylene oxide chain in the molecular weight range from 88 to 4000, of which at least 40% of the alkylene oxide units comprise ethylene oxide units and the remainder comprise propylene oxide units.

2. A process for the preparation of polymer blends according to claim 1 by mixing the individual components at 80°C to 150°C in plastics processing machines, wherein the starch A) is used optionally in the form of water-containing starch and/or the plasticiser C) is used in the form of aqueous solutions, with simultaneous or subsequent removal of the water introduced by evaporation to a residual content of 2 to 20 parts by wt. per 100 parts by wt. of water-free starch, characterised in that the polyurethanes B) containing urea groups are used in the form of 20 to 50 wt.% aqueous dispersions which have been prepared by known methods, whilst maintaining an equivalent ratio of isocyanate groups to groups which are reactive towards isocyanate groups of 1:1 to 2:1, from
a) a diisocyanate component comprising
a1) hexamethylene diisocyanate or
a2) mixtures of hexamethylene diisocyanate with a total of up to 60 wt.%, based on mixture, of 1-isocyanato-3,3,5-trimethyl-5-isocyanatomethylcyclohexane and/or 4,4'-diisocyanatodicyclo-hexylmethane and/or 1-methyl-2,4(6)-diisocyanatocyclohexane with
b) a diol component, comprising
b1) at least one polyester diol having a molecular weight which may be calculated from the hydroxyl group content from 500 to 10,000, of (i) adipic acid and/or succinic acid and (ii) at least one alkane diol having 2 to 6 carbon atoms, or
b2) a mixture of such polyester diols with up to 32 wt.%, based on the total weight of component b), of optionally ether group-containing alkane diols having 2 to 6 carbon atoms,
c) a diamine component in an amount from 2 to 50 equivalent %, based on the total amount of groups which are reactive towards isocyanate groups and present in components b) and c), comprising
c1) diaminosulfonates corresponding to the general formula
H₂N- (-CH₂-)ₙ-NH- (-CH₂-)ₘ-SO₃Me
or
c2) mixtures of diaminosulfonates c1) with up to 90 wt.%, based on the total weight of component c), of ethylene diamine, optionally
d) hydrophilic polyether alcohols corresponding to the general formula
H-X-O-R
in an amount of up to 10 wt.%, based on the total weight of components b), c) and d), and optionally
e) water, which is not included in the calculation of the equivalent ratio of isocyanate groups to groups which are reactive towards isocyanates,
wherein, in the general formulae mentioned,
m and n independently of one another, stand for numbers from 2 to 6,
Me stands for potassium or sodium,
R stands for a monovalent hydrocarbon radical having 1 to 12 carbon atoms, and
X means a polyalkylene oxide chain in the molecular weight range from 88 to 4000, of which at least 40% of the alkylene oxide units comprise ethylene oxide units and the remainder comprise propylene oxide units.

3. The use of the polymer blends according to claim 1 for the manufacture of moulded parts, films, fibres, coatings or laminates by melt processing.

## Revendications

1. Mélanges polymères aptes à une déformation thermoplastique, biodégradables, contenant de l'amidon, constitués essentiellement par
A) 100 parties en poids d'amidon anhydre,
B) de 0,1 à 70 parties en poids de polyuréthanne présentant des groupes urée,
C) de 0,5 à 70 parties en poids d'un composant de plastifiant constitué par de l'urée et/ou par au moins un alcool polyvalent du domaine de poids moléculaire de 62 à 400, et
D) de 2 à 20 parties en poids d'eau,
caractérisés en ce que, en ce qui concerne le composant B), il s'agit de polyuréthannes présentant des groupes urée, qui ont été préparés conformément à des procédés connus, tout en maintenant un rapport d'équivalents des groupes isocyanates aux groupes aptes à réagir vis-à-vis de groupes isocyanates de 1 : 1 à 2 : 1, à partir de
a) un composant de diisocyanate constitué par
a1) de l'hexaméthylènediisocyanate ou
a2) des mélanges d'hexaméthylènediisocyanate avec au total jusqu'à concurrence de 60 % en poids, rapportés au mélange, du 1-isocyanato-3,3,5-triméthyl-5-isocyanatométhylcyclohexane et/ou du 4,4'-diisocyanato-dicyclohexylméthane et/ou du 1-méthyl-2,4(6)-diisocyanatocyclohexane avec
b) un composant de diol constitué par
b1) au moins un polyesterdiol possédant un poids moléculaire, qui peut être calculé à partir de la teneur en groupes hydroxyle, de 500 à 10.000, (i) d'acide adipique et/ou d'acide succinique et (ii) d'au moins un alcanediol contenant de 2 à 6 atomes de carbone, ou
b2) un mélange de polyesterdiols de ce type avec, jusqu'à concurrence de 32 % en poids rapportés au poids total du composant b), des alcanediols contenant de 2 à 6 atomes de carbone, présentant le cas échéant des groupes éther,
c) un composant de diamine en une quantité de 2 à 50 équivalents % rapportée à la quantité totale des groupes aptes à réagir vis-à-vis de groupes isocyanates présents dans les composants b) et c), constitué par
c1) des diaminosulfonates répondant à la formule générale
H₂N-(-CH₂-)ₙ-NH-(-CH₂-)ₘ-SO₃Me
ou
c2) des mélanges de diaminosulfonates c1) avec, jusqu'à concurrence de 90 % en poids rapportés au poids total du composant c), de l'éthylènediamine, le cas échéant
d) des polyétheralcools hydrophiles répondant à la formule générale
H-X-O-R
en une quantité allant jusqu'à 10 % en poids rapportés au poids total des composants b), c) et d), ainsi que le cas échéant
e) de l'eau qui n'intervient pas dans le calcul du rapport d'équivalents des groupes isocyanates aux groupes aptes à réagir vis-à-vis de groupes isocyanates,
dans lesquels, dans les formules générales mentionnées,
m et n représentent, indépendamment l'un de l'autre, des nombres de 2 à 6,
Me représente un atome de potassium au un atome de sodium,
R représente un radical d'hydrocarbure monovalent contenant de 1 à 12 atomes de carbone, et
X représente une chaîne d'oxyde de polyalkylène du domaine de poids moléculaire de 88 à 4000, dont les unités d'oxyde d'alkylène sont constituées au moins à concurrence de 40 % par des unités d'oxyde d'éthylène et pour le reste par des unités d'oxyde de propylène.

2. Procédé pour la préparation de mélanges polymères selon la revendication 1, par mélange des composants individuels à une température de 80 à 150°C dans des machines de traitement de matières synthétiques, dans lequel on met en oeuvre de l'amidon A) le cas échéant sous la forme d'amidon anhydre et/ou le plastifiant C) sous la forme de solutions aqueuses, en éliminant de manière simultanée ou ultérieurement l'eau incorporée par évaporation jusqu'à ce que l'on obtienne une teneur résiduelle de 2 à 20 parties en poids par 100 parties en poids d'amidon anhydre, caractérisé en ce qu'on met en oeuvre des polyuréthannes B) présentant des groupes urée sous la forme de dispersions aqueuses présentant une concentration de 20 à 50 % en poids, qui ont été préparés, tout en maintenant un rapport d'équivalents des groupes isocyanates aux groupes aptes à réagir vis-à-vis de groupes isocyanates de 1 : 1 à 2 : 1, à partir de
a) un composant de diisocyanate constitué par
a1) de l'hexaméthylènediisocyanate ou
a2) des mélanges d'hexaméthylènediisocyanate avec au total jusqu'à concurrence de 60 % en poids, rapportés au mélange, du 1-isocyanato-3,3,5-triméthyl-5-isocyanatométhylcyclohexane et/ou du 4,4'-diisocyanato-dicyclohexylméthane et/ou du 1-méthyl-2,4(6)-diisocyanatocyclohexane avec
b) un composant de diol constitué par
b1) au moins un polyesterdiol possédant un poids moléculaire, qui peut être calculé à partir de la teneur en groupes hydroxyle, de 500 à 10.000, (i) d'acide adipique et/ou d'acide succinique et (ii) d'au moins un alcanediol contenant de 2 à 6 atomes de carbone, ou
b2) un mélange de polyesterdiols de ce type avec, jusqu'à concurrence de 32 % en poids rapportés au poids total du composant b), des alcanediols contenant de 2 à 6 atomes de carbone, présentant le cas échéant des groupes éther,
c) un composant de diamine en une quantité de 2 à 50 équivalents % rapportée à la quantité totale des groupes aptes à réagir vis-à-vis de groupes isocyanates présents dans les composants b) et c), constitué par
c1) des diaminosulfonates répondant à la formule générale
H₂N-(-CH₂-)ₙ-NH-(-CH₂-)ₘ-SO₃Me
ou
c2) des mélanges de diaminosulfonates c1) avec, jusqu'à concurrence de 90 % en poids rapportés au poids total du composant c), de l'éthylènediamine, le cas échéant
d) des polyétheralcools hydrophiles répondant à la formule générale
H-X-O-R
en une quantité allant jusqu'à 10 % en poids rapportés au poids total des composants b), c) et d), ainsi que le cas échéant
e) de l'eau qui n'intervient pas dans le calcul du rapport d'équivalents des groupes isocyanates aux groupes aptes à réagir vis-à-vis de groupes isocyanates,
dans lequel, dans les formules générales mentionnées,
m et n représentent, indépendamment l'un de l'autre, des nombres de 2 à 6,
Me représente un atome de potassium au un atome de sodium,
R représente un radical d'hydrocarbure monovalent contenant de 1 à 12 atomes de carbone, et
X représente une chaîne d'oxyde de polyalkylène du domaine de poids moléculaire de 88 à 4000, dont les unités d'oxyde d'alkylène sont constituées au moins à concurrence de 40 % par des unités d'oxyde d'éthylène et pour le reste par des unités d'oxyde de propylène.

3. Utilisation des mélanges polymères selon la revendication 1 pour la fabrication d'éléments moulés, de feuilles, de fibres, d'enductions ou de stratifiés par traitement thermoplastique.
